# EUROPEAN PATENT APPLICATION

(11) **EP 1 946 832 A1**
(43) Date of publication of application: **23.07.2008**
(21) Application number: 07100843.7
(22) Date of filing: 19.01.2007
(51) Int. Cl.: B01J 19/08, C04B 41/45

(54) **A processing method for surfaces of stone materials and composites**

(71) Applicant: Università Degli Studi Di Milano - Bicocca, 20126 Milano (IT); SAID SPA, 36033 ISOLA VICENTINA (Vicenza) (IT)
(72) Inventor: Riccardi, Claudia, 20147 Milano (IT); Esena, Paola, 24047 Treviglio (IT); Zanini, Stefano, 20039 Varedo (IT); Bonato, Giannino, 36015 Schio (IT)
(74) Representative: Gervasi, Gemma

(57) **Abstract**

The object invention of the present patent relates to both vacuum and atmospheric pressure plasma processes to confer stone materials and composites surface properties such as water-repellency, oil-repellency, resistance to chemical aggressions by acids, bases etc., UV resistance, resistance to the bleaching of the substrate, anti-bacterial properties, anti-adhesive properties with relation to atmospheric dusts specifically in an urban environment, anti-sliding properties and increase in the friction coefficient.

## Description

### State of the Art

Stone materials, which are exposed to atmospheric agents and are used for house-building purposes, are subjected to the deterioration and decay due to the absorption of substances, which penetrate within the material because of the porosity of the same. Therefore, in order to avoid the deterioration thereof, protective agents are used, which confer water-repellent properties to the surface of the stone as an effect of the application to the material of chemical compounds which serve as a shield between the stone and the environment, thus avoiding the penetration of water in the material, without however creating a barrier which prevents the gaseous exchange between the inside and the outside of the same. By minimising the action of water, the negative effects associated to the penetration of the same are reduced; among these:
1) salt dissolution, transport and crystallisation
2) freeze-thaw phenomena
3) action of atmospheric pollutants.

The products commonly used in the field of the restoration of stone materials are subdivided in two main classes or "families": consolidants and protectives. It is difficult to clearly distinguish between protection and consolidation, because the two operations often correspond and their common purpose is to improve the resistance to water and reduce the penetration of gases and vapours, as well as to improve the mechanical resistance. However, it may be stated that the main function of a protective agent is to avoid the penetration in the stone material of rainwater and condensation water, and to form a shield against atmospheric pollutants. The protection consists in applying to the sound or restored stone a film which somehow represents a sacrificial surface. The consolidation is required instead when the stone loses its cohesion, both on the surface and in depth, and the decay is at such a stage that the very physical survival of the manufacture good is at stake.

Typical consolidants are acrylic resins, silicates/alkylsiloxanes. The consolidation serves to eliminate the sudden physical-mechanical differences existing between the external altered part of the stone and the internal layers which are well conserved, thus restoring a continuity in the profile of the material.

Disadvantageously, the immediate result subsequent to the application of a consolidant is a variation in the porosity of the stone as an effect of the penetration of the consolidant agent within. When the consolidant penetrates, it fills the cavities of the porosity of the stone, thus creating a new porometric distribution and preventing the stone manufacture good from permeating the internal humidity of the stone.

Silicone resins, waxes and fluorinating resins are classified among the protective agents. Specifically, the protection systems for stones must not at all alter the colour of the substrate and the natural permeability to the vapour of the stone itself. Such treatments must also not react with the stone so that the treatment is reversible.

The purposes of the protection treatment are to slow down the rate of the deterioration processes of the stone material and reduce the possibility that deterioration processes occur.

The water-repellent agents may be subdivided in two large groups of film-formers and penetrants.

The film-formers deposit the main water-repellent component on the surface of the substrate.

The penetrants penetrate within the porous structure of the substrate and deposit the main water-repellent component on the walls of the pores, within the pores themselves or both and are also invisible. Many researches have demonstrated that very few products are able to penetrate at great depths (greater than 2.5 mm). The silicates, siliconates, silanes and siloxanes are commonly considered penetrants.

In the last 10 years, different organic compounds have been designed and applied as coatings for construction materials, such as synthetic and natural waxes, acrylic and siloxane resins, fluorinated polyolefins and fluoroelastomers. All of these materials are often used as protective coatings for stone materials in the conservation of cultural heritage, although without it being an appropriate knowledge of the properties of the polymer/stone system and without it being performed a satisfactory optimisation of the molecular structure for protective purposes. To this day, the results have been: an insufficient protection and a low resistance to atmospheric agents.

As a consequence of the characteristics of most polymeric materials which in most cases, these not only have very short-term water-repellent characteristics, but are also often unstable in photoxidant conditions, which are typical of the exposure to external agents.

The current possibilities to carry out the purposes of the surface protection are the application of a material/product that produces a "sacrificial surface", which may be deteriorated "in place of" the surface to be protected, and the application of a material/product that reduces the penetration of water through the surface to protect.

The typologies of treatment are the application of a covering coating, which is not water-repellent (plasters,...) or the application of a non-covering (transparent) and water-repellent product.

The surface protection treatment must always be carried out on clean surfaces (free of saline efflorescences and clear forms of biological attack, etc.) in a good compactness state, without any fractures and macroscopic discontinuities.

The protective action develops through the water-repellent effect conferred to the treated surface, an effect reducing the penetration of water and, subsequently, reducing the possibility of the occurrence of all of deterioration processes related thereto.

The water-repellent products must have the following characteristics: conferring a good water-repellency to the treated surface, not reducing the permeability to vapour, not altering the appearance (colour, brilliance, ...) of the surface, displaying no toxicity, rendering the adhesion of dust difficult and slowing down the fixing of dirt to the treated surfaces, having a good stability to sun light and to weather conditions and atmospheric pollution, to which they will have to be exposed, not being easily attacked by biodeteriorating agents (bacteria, algae, fungi, ...), and having a life of at least 5 years depending on the environmental conditions.

The treatments with water-repellent products may be performed only in the case of manufacture goods, or on parts thereof, which receive water only through the surfaces to be treated.

The currently used protective methods derive from methodologies developed in the restoration field of stone materials, generally require reversibility and accordingly have a necessarily limited life in the course of time.

Currently, there are no processes capable of protecting the surface of stone materials and well-established technologies capable of conferring new surface properties.

The object method of the present invention relates to cold plasma processes adapted to confer surface properties as water-repellency, oil-repellency, resistance to chemical aggressions by acids, bases, etc., resistance to UV radiation, resistance to bleaching of the substrate, anti-bacterial properties, anti-adhesive properties with relation to atmospheric dusts especially in an urban environment, anti-sliding properties (increase in the friction coefficient) without altering the appearance (colour, brilliance, etc.) of the material.

The technologies based on plasma processes are very important for many industrial sectors, first of all in microelectronics, where, at this point, they have become indispensable. The surface modification of materials by the exposure to plasmas generally displays many advantages in comparison to similar traditional chemical treatments.

These are dry processes not requiring solvents or chemical products which may represent a risk for the environment and, furthermore, the modifications introduced by such treatments involve only the surface layers of the substrate and do not alter the general physical-mechanical properties of the materials.

Most plasma processes used in the industry are carried out in low pressure rarefied gasses (generally between 10⁻⁵ and tens of mbars) exploiting vacuum techniques.

In such conditions, a very uniform plasma is obtained, which is designated as "glow discharge". The plasma is usually generated by applying an electric field to the rarefied gas. Such a field may be direct or alternating with frequencies in the range reaching microwaves and optical radiations (laser). Different types of ions, electrons and neutral radicals capable of reacting with the surface of the material to be treated are generated in the plasma.

This type of technology is most advantageous because it employs very small amounts of reactive gasses and is performed in a controlled environment (the controlled atmosphere chamber) capable of isolating the treatment area from the surrounding atmosphere. The use of vacuum technologies does not however allow the continuous treatment of materials and introduces waiting times to bring the chamber to a low pressure by means of specific pumping assemblies. The plasmas generated at an atmospheric pressure eliminate instead the requirement for expensive vacuum apparatuses with the corresponding pumping assemblies and allow continuous treatments with faster times.

### Description of the invention

The object invention of the present patent relates to plasma processes according to claim 1. Advantageously, the plasma is generated both under vacuum and at an atmospheric pressure to confer surface properties such as water-repellency; oil-repellency; resistance to chemical aggressions by acids, bases, etc.; resistance to UV radiation; resistance to bleaching of the substrate; anti-bacterial properties; anti-adhesive properties with relation to atmospheric dusts especially in an urban environment; anti-sliding properties, increase in the friction coefficient due to materials such as leather, resins and elastomers applied to materials such as:
1) natural materials, marbles, granites and natural stones generally intended for use in the house-building, furniture and artistic/decorative sectors;
2) traditional materials such as mortars, concretes, plasters, bricks for use in the house-building sectors;
3) stoneware and ceramics for use in the house-building floor sector and house-building internal and external coverings sector;
4) ceramic and glass materials specific for mosaics for use in the house-building floor sector and the house-building internal and external coverings sector;
5) glasses for use in the furniture, artistic/decorative and house-building sectors;
6) stainless steels for use in the house-building, furniture and mechanical construction sectors;
7) composite materials (resin/quartz/inorganic dusts) for use in the house-building floor sector and the house-building internal and external coverings sector.

The object invention of the present patent also relates to stone materials and composites obtained according to the method of the invention with a contact angle to water, water-repellency > 90°; with a contact angle to castor oil < 30° before treatment and > 50° after treatment; and with a contact angle to olive oil < 30° before treatment and > 60° after treatment.

The processes according to the invention, with respect to those according to the state of the art advantageously increase the contact angle in the case both of attack by water and attack by oil, the resistance to wear, the resistance to UV radiation, etc. are not observable by use of conventional techniques. Furthermore, the duration of the effectiveness of the treatment is longer than that observed by conventional techniques and improves the environmental influence and displays a specific decrease of the consumption of chemical products per surface unit to be treated.

Being dry processes, the use of water and/or cleaning or washing treatments with water and/or solvents is not required.

### Plasma treatments

Cold plasmas may be generated in different ways by applying a potential difference (generally from 1 to tens of kV) between the two electrodes. The applied current may be direct or alternating with variable frequencies reaching microwaves and laser radiations. The plasma may be generated directly in the area in which the treatment is carried out (direct treatment), i.e. the materials are directly exposed to the discharge. It is possible to generate the plasma between two electrodes and carry the active chemical species on the surfaces to be treated (remote treatment) by means of a gas flow. In this way, the substrates are not directly exposed to the discharge.

Different gasses may be used in the applications to the stone materials: nitrogen, noble gases, oxygen, hydrogen, fluorinated gases in general (SF₆, SOF₂, etc.), gaseous hydrocarbons (CH₄, C₂H₂, etc.), gaseous fluorocarbons (CF₄, C₂F₆, etc.). Mixtures of the above said gases may also be used.

By using a vaporisation system, the liquid phase compounds may be mixed to the gases, e.g. water vapours, ammonia, acrylic acid, hexamethyldisiloxane (HMDSO) and other silane, siloxane, hydrocarbon and perfluorine compounds may be used.

All concentration ranges of the vapours in the gas (or in the mixture of gases) may be obtained up to the saturation concentration (i.e. the concentration at which a liquid is in equilibrium with its vapour at a determined temperature and pressure) of the liquid themselves at the temperature and pressure conditions employed in the experiment.

According to the materials treated and the requirements, it is possible to use vacuum or atmospheric pressure treatment methods.

In vacuum treatments, the plasma exposure step is preceded by a degassing step, in which the samples are taken to limit pressure by exploiting a vacuum chamber. Thereafter, the chamber is filled with the gas (or gas mixture) until reaching the working pressure which is maintained by evacuating the chamber by an appropriate pumping system.

In atmospheric pressure treatments, the plasma exposure step is a process in which the materials are continuously treated working at an atmospheric pressure.

The plasma treatments may be performed after smoothing:
a) as a pre-treatment for subsequent conventional chemical reactions
b) as a treatment to confer new surface properties
c) as an after-treatment, after treatments adapted to improve the uniformity of the material, or coatings with chemical compounds to confer new surface properties

With the above cited procedures, different processes may be performed, which are able to confer water-repellency and oil-repellency properties, chemical resistance to the attack of organic acids, resistance to UV radiation, anti-bacterial properties, anti-adhesive properties to dusts, anti-stain, anti-wear and anti-glare properties.

The testing was performed both with reactors working at a low pressure and at an atmospheric pressure.

### Example 1

### Examples of water-repellency: low pressure treatments

### Materials

- Jurapanà
- Bianco sardo
- Polyester-quartz conglomerate
- Lipiça unito
- Kashmire white
- Imperial white

### Reactor employed

A capacitative coupling RF reactor comprised of a steel chamber was used. The reactor is evacuated to a pressure of 10⁻³ - 10⁻⁶ mbars by using a turbomolecular pump in series to a rotational pump. Thereafter, the process gas is introduced by means of a micrometric valve until the working pressure is reached (10⁻² - 10 mbars) and the laying takes place "in flow" with the aid of a rotational pump which always remains working thus maintaining the gas introduction valve always open.

The antenna is externally connected through an adaptor to a power generator; when the plasma is stable, the discharge is maintained at a constant power density (power density < 1 W/ cm² ) for a determined treatment time (10 seconds-20 minutes)

### Treatment step

The following table displays the measurements of the contact angles of 6 types of samples which were not plasma treated (Data Physics: Contact Angle System OCA 20).

Each sample was subjected to 7 measurements of the contact angle, by depositing 20 microlitre drops of distilled water in random positions and subsequently calculating the average

| **Sample** | **average** |
|---|---|
| Jurapanà p. | **56.6** |
| Bianco sardo p. | **42.3** |
| Polyester-quartz conglomerate p. | **69.75** |
| Lipiça unito p. | **70.5** |
| Kashmire white p. | **57.6** |
| Imperial white p. | **43.8** |
| | |

### Types of treatment

The following table displays some operational parameters used

| Sample | Power | Working pressure in HMDSO | Distance from the antenna | Time of the treatment |
|---|---|---|---|---|
| Jurapanà | 70 watts | 0.05 mbars | 3 cm | 5 min |
| Bianco sardo | 70 watts | 0.05 mbars | 3 cm | 5 min |
| Polyester-quartz conglomerate | 70 watts | 0.05 mbars | 3 cm | 5 min |
| Kashmire white | 90 watts | 0.05 mbars | 3 cm | 5 min |
| Imperial white | 60 watts | 0.05 mbars | 3 cm | 5 min |

### Characterisation of the treated samples

The following table displays the values of contact angle of some samples which were plasma treated (the values displayed are an average of the measurements of the contact angles)

| Material | Contact angle as it is | Contact angle plasma treatment (low pressure) |
|---|---|---|
| IMPERIAL WHITE | **43.8** | 112° |
| BIANCO SARDO | **42.3** | 105.1° |
| JURAPANA' COLOMBO | **56.6** | 107° |
| POLYESTER-QUARTZ CONGLOMERATE | **69.75** | 114.9° |
| KASHMIRE WHITE | **57.6** | 106.9° |

### Example 2

### Materials

- GRANITE:
   a) Jurapanà Colombo
   b) Verde Ubatuba Bahia
   c) Giallo S. Cecilia
   d) Nero Zimbawe
   e) Labrador Blu Pearl "GT"
   f) Red Multicolor
   g) Rosso Balmoral
- MARBLE:
   a) Veselye Unito
   b) Bianco Carrara

### Reactor employed

The reactor employed is that of example 1.

### Types of treatment

The samples were treated with different cold plasmas and, for a same cold plasma, with conditions (in flow or not in flow treatment) and operational parameters (pressure, power and treatment time) varying.

Hereafter, some different types of treatments the materials were subjected to are briefly explained.
1) Treatment by means of hexamethyldisiloxane (HMDSO) plasma in non flow conditions, i.e. by filling the vacuum chamber with gas at the desired pressure while maintaining the pumping system off, followed by a treatment with plasma phase SF₆ and in flow conditions.
2) Treatment by means of styrene plasma in flow conditions, followed by a treatment with plasma phase SF₆ and in flow conditions.
3) Treatment by means of (HMDSO) plasma in non flow conditions, followed by a treatment with plasma phase SF₆ and in flow conditions.
4) Preventive treatment by means of O₂ plasma in flow conditions, followed by two treatments employing HMDSO plasma: HMDSO plasma in mixture with oxygen was used in the first, pure HMDSO plasma was used in the second; both treatments were performed in flow conditions; finally the sample was treated with plasma phase SF₆ and in flow conditions.
5) Treatment by means of (HMDSO) plasma in flow conditions.

### Characterisation of the treated samples

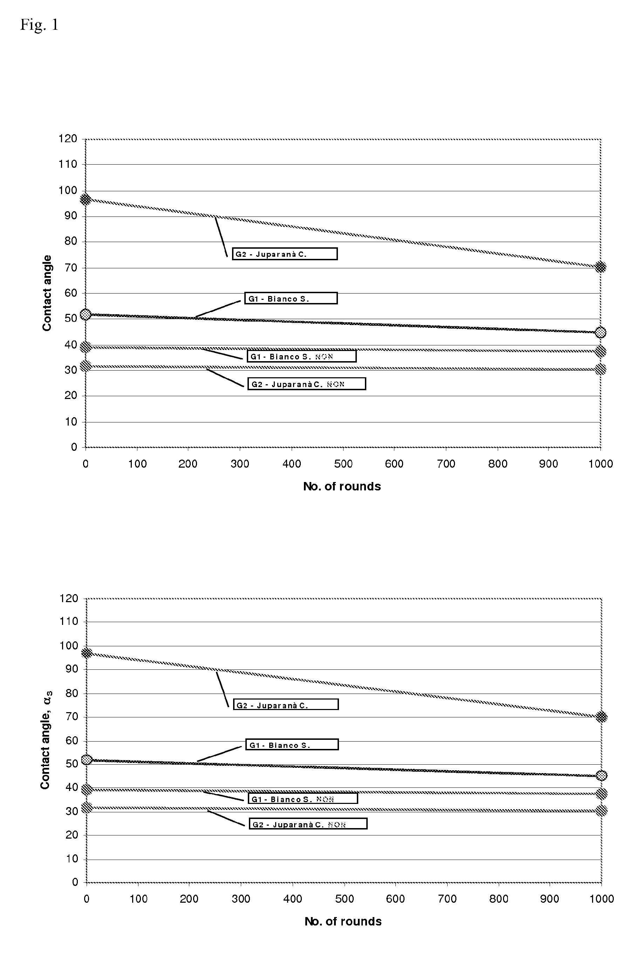

- All the treated materials display an increase of the contact angle from a value smaller than 90° to a value higher than 90°.
- Persistence of the surface modification after the abrasion test. A measurement of the contact angle after the abrasion test is shown in figure 1.

The abrasion test was performed according to the **ISO 10545-7/1996** standard.

The standard is provided for abrasion tests on ceramic but in the practice of industrial and research laboratories it is also used for other products. The test was developed to reproduce an abrasion comparable to the trampling and/or to the ordinary cleaning operations of surfaces for building coverings.

There being no generalised and commonly acknowledged standards or practices on natural stone similar to this one, it was decided not to use an arbitrary test system, but rather to adopt a somehow coded method that allows an easy reproducibility thereof.

This standard comprises:
1) the preparation of a flat sample to be tested having predefined size;
2) the use of an appropriate instrumentation capable of producing vibrations on a working plane set in rotation;
3) the fixing of the sample to the working plane;
4) the positioning on the surface to be tested of predefined amounts in weight, granulometry and diameter of the following products:
   - steel spheres for bearings
   - corundum (Al₂O₃)
   - water
5) the carrying out of an operation cycle for a predefined time.

The system is set in rotatory motion under mechanical vibration for a known time, during such a stress cycle the surface is subjected to the wearing action of the spheres and the corundum, which collide on the sample with a concurrent slightly lubricating action of the water.

The 10545-7 standard only provides for the negative/positive qualitative evaluation concerning the state of the surface: the outcome of the test is therefore expressed by a YES or NO with respect to an abrasive action to be evaluated by means of a visual test with a UV lamp.

In our case, measurements of the contact angle were carried out as a quantitative test of the persistence of the surface modification effect due to the plasma treatment.

Two materials, Juparanà Colombo and Bianco Sardo, were subjected to test. They are two extremely representative granites from the totality of the natural stones because of their microstructures. Indeed, Bianco Sardo has an extremely compact structure whereas in Juparanà the structure is very complex and critical in relation to the possible emergence of porosity and/or discontinuity of the crystals forming the microstructure itself.

| **Material** | **Initial contact angle (natural state of the surface)** | **Contact angle after plasma treat.** | **% variation after treatment** | **Contact angle after abrasion test** | **% variation remaining after the abrasion test with respect to the initial angle** |
|---|---|---|---|---|---|
| Juparana' Colombo | **32°** | **99°** | **+ 209 %** | **70°** | **+ 125 %** |
| Bianco Sardo | **39°** | **51°** | **+ 30 %** | **46°** | **+ 18 %** |

The abrasion test demonstrated that the effect of the treatment persists even after a considerable surface wearing action. The values of the contact angle remain very positive even after the abrasion occurred.

### ATMOSPHERIC PRESSURE TREATMENTS

### Example 3

### Materials

- Jurapanà.
- Bianco sardo
- Polyester-quartz conglomerate
- Lipiça unito
- Kashmire white
- Imperial white

### Treatment step: b or c

### Reactor employed

Atmospheric pressure treatments were carried out using cold plasma source of a remote type. This apparatus comprises a hollow electrode (electrically grounded), within which there is a high voltage electrode. The process gas flows within the cavity and carries in a convective manner through the nozzle the chemical species generated in the plasma on the surface to be treated. The voltage generally varies between 0.2 and 20 kV with alternating currents at frequencies from 50 Hz to 20 MHz. The gas flows may vary from hundreds of sccm to hundreds of Iₙ/min .

The reactor is provided with a system capable of using liquid precursors, which are mixed in the carrier gas, with a flow from 0.001 to 200 ml/min.

Since the gas flow generally maintains the discharge area free from contamination, it is possible to use these sources in air or in a chamber with a slight underpressure in order to avoid the escape of potentially harmful gases or overpressure in order to avoid external contaminations.

The carrier gases are: nitrogen, water, noble gases, inert gases, used in a mixture with other reactive gases or vapour phase liquids as well.

### Types of treatment

The table displays the operational parameters used.

| **Sample** | **Power** | **HMDSO (ml/min)** | **SCFH AIR (nitrogen) (HMDSO carrier)** | **Carrier (psi)** | **Distance* (cm)** |
|---|---|---|---|---|---|
| Jurapanà /1 | 1000 watt | 0.88 | 40 | 10 | 0.5 |
| Bianco sardo/1 | 1000 watt | 0.88 | 40 | 10 | 0.5 |
| Polyester-quartz conglomerate /1 | 1000 watt | 0.88 | 40 | 10 | 0.5 |
| Lipiça unito/1 | 1000 watt | 0.88 | 40 | 10 | 0.5 |
| Kashmire white/1 | 1000 watt | 0.88 | 40 | 10 | 0.5 |
| Imperial white/1 | 1000 watt 1000 watt | 0.88 | 40 | 10 | 0.5 |

| | | | | | |
|---|---|---|---|---|---|
| * distance surface source | | | | | |

### Characterisation of the treated samples

The following table displays the measurements of the contact angle on the treated samples (average): on each sample, the contact angle was measured both along the x direction and along the y position from the centre of the tile and measuring the contact angle every 5 mm. The treatment is uniform.

| Material | Contact angle as it is | Contact angle plasma treat. (atmospheric pressure) |
|---|---|---|
| IMPERIAL WHITE | **43.8** | 93.8° |
| BIANCO SARDO | **42.3** | 97.9° |
| JURAPANA' COLOMBO | **56.6** | 102° |
| POLYESTER-QUARTZ CONGLOMERATE | **69.75** | 105.9° |
| KASHMIRE WHITE | **57.6** | 101.2° |

### Example 4

### Material

a) Jurapanà Colombo
b) Carrara marble

### Treatment step: b

### Reactor employed and type of treatment

The reactor employed and the type of treatment are those described in example 3

### Characterisation of the treated samples

The measurements of the contact angle of the plasma treated samples are displayed hereafter

| **Sample** | **Contact angle as it is** | **Contact angle plasma treated** |
|---|---|---|
| Jurapanà | **35.2** | **101.2** |
| Carrara marble (glossy) | **40.6** | **92.3** |

### OIL-REPELLENCY

### LOW PRESSURE TREATMENTS

### Example 5

### Materials

- Jurapanà
- Bianco sardo
- Polyester-quartz conglomerate
- Lipiça unito
- Kashmire white
- Imperial white

### Treatment step: b or c

### Reactor employed

A capacitative coupling RF reactor comprised of a steel chamber was used. The reactor is evacuated to a pressure of 10⁻³ - 10⁻⁶ mbars by using a turbomolecular pump in series to a rotational pump. Thereafter, the process gas is introduced by means of a micrometric valve until the working pressure is reached (10⁻² - 10 mbars) and the laying takes place "in flow" with the aid of a rotational pump.

The antenna is externally connected through an adaptor to a power generator; when the plasma is stable, the discharge is maintained at a constant power density (power density < 1 W/ cm² ) for a determined treatment time (10 seconds-20 minutes).

### Types of treatment

The samples were treated with different cold plasmas and, for the same cold plasma, with conditions (in flow or not in flow treatments) and operational parameters (pressure, power and treatment time) varying.

Hereafter, some different types of treatments the materials were subjected to are briefly explained.
6) Treatment by means of hexamethyldisiloxane (HMDSO) plasma in non flow conditions, followed by a treatment with plasma phase SF₆ and in flow conditions.
7) Treatment by means of styrene plasma in flow conditions, followed by a treatment with plasma phase SF₆ and in flow conditions.
8) Treatment by means of (HMDSO) plasma in non flow conditions, followed by a treatment with plasma phase SF₆ and in flow conditions.
9) Preventive treatment by means of O₂ plasma in flow conditions, followed by two treatments employing HMDSO plasma: HMDSO plasma in mixture with oxygen was used in the first, pure HMDSO plasma was used in the second; both treatments were performed in flow conditions; finally the sample was treated with plasma phase SF₆ and in flow conditions.

### Characterisation of the treated samples

Each sample was subjected to 7 measurements of the contact angle, by depositing 20 microlitre drops of castor oil in random positions and subsequently calculating the average. All the treated materials display an increase in the contact angle from a minimum value of 30° to a maximum value of 50°.

### Example 6

### Materials

- GRANITE:
   h) Jurapanà Colombo
   i) Verde Ubatuba Bahia
   j) Giallo S. Cecilia
   k) Nero Zimbawe
   1) Labrador Blu Pearl "GT"
   m) Red Multicolor
   n) Rosso Balmoral
- MARBLE:
   c) Veselye Unito
   d) Bianco Carrara

### Treatment step: b or c

### Reactor employed

The reactor employed is that of example 1.

### Types of treatment

The samples were treated with different cold plasmas and, for the same cold plasma, with conditions (in flow or not in flow treatments) and operational parameters (pressure, power and treatment time) varying.

Hereafter, some different types of treatments the materials were subjected to are briefly explained.
10) Treatment by means of hexamethyldisiloxane (HMDSO) plasma in non flow conditions, followed by a treatment with plasma phase SF₆ and in flow conditions.
11) Treatment by means of styrene plasma in flow conditions, followed by a treatment with plasma phase SF₆ and in flow conditions.
12) Treatment by means of (HMDSO) plasma in non flow conditions, followed by a treatment with plasma phase SF₆ and in flow conditions.
13) Preventive treatment by means of O₂ plasma in flow conditions, followed by two treatments employing HMDSO plasma: HMDSO plasma in mixture with oxygen was used in the first, pure HMDSO plasma was used in the second; both treatments were performed in flow conditions; finally the sample was treated with plasma phase SF₆ and in flow conditions.

### Characterisation of the treated samples

Each sample was subjected to 7 measurements of the contact angle, by depositing 20 microlitre drops of castor oil and olive oil in random positions and subsequently calculating the average. All the treated materials display an increase of the contact angle from a minimum value of 30° to a maximum value of 50° in the case of castor oil and from a minimum value of 30° to a maximum value of 60° in the case of olive oil.

### ATMOSPHERIC PRESSURE TREATMENT

### Example 7

### Materials

- Jurapanà.
- Bianco sardo
- Polyester-quartz conglomerate
- Lipiça unito
- Kashmire white
- Imperial white

### Treatment step: b or c

### Reactor employed and type of treatment

The reactor employed and the type of treatment are those described in example 3

### Characterisation of the treated samples

The contact angle (Data Physics: Contact Angle System OCA 20) was measured by depositing 20 microlitre drops of castor oil: the measurements of the contact angle of the materials "as it is" and the measurements of the contact angle of the plasma treated samples are displayed in the following table.

| Material | Contact angle as it is | Plasma treated contact angle |
|---|---|---|
| BIANCO SARDO | 26.5° | 55.8° |
| JURAPANA' COLOMBO | 27.8° | 56.9° |
| LIPICA UNITO | 31.8° | 56.4° |
| IMPERIAL WHITE | 29.5° | 57.5° |
| KASHMIRE WHITE | 30.3° | 55.1° |
| POLYESTER-QUARTZ CONGLOMERATE | 5.1° | 54.5° |

### OTHER ANTI-STAIN PROPERTIES

### ATMOSPHERIC PRESSURE TREATMENTS

### Example 8

### Material

- Jurapanà.

### Treatment step: b or c

### Reactor employed and type of treatment

The reactor employed and the type of treatment are those described in example 3

### Characterisation of the treated samples

To evaluate the anti-stain properties a drop of olive oil, castor oil, coffee, vinegar and coca cola (20 microlitres) was deposited and the size of the stain was evaluated after 24 hours.

The following results were obtained (residual stain diameter):
- olive oil: treated sample diameter of approximately 0.5 cm, non treated sample diameter of approximately 1 cm.
- castor oil: treated sample diameter of approximately 1 cm, non treated sample diameter of approximately 3 cm.
- vinegar: treated sample diameter of approximately 0.5 cm, non treated sample diameter of approximately 1 cm.
- coca-cola: treated sample diameter of approximately 0.5 cm, non treated sample diameter of approximately 1 cm.
- coffee: treated sample diameter of approximately 0.5 cm, non treated sample diameter of approximately 1 cm.

All the substances leave no residual stains after cleaning with a cotton cloth

### UV RESISTANCE

### Example 9

### Materials

- Jurapanà.

### Reactor employed

The reactor employed is that of example 1.

### Type of treatment

Treatment by means of (HMDSO) plasma in flow conditions.

### Characterisation of the treated samples

The sample was subjected to radiation by a UV lamp at two frequencies (254/366 nm) for a period of time of 168 hours. No changes are observed on the treated sample, whereas a considerable alteration of the colour is observed on the non treated sample

### HYDROPHILY

### Example 10

### Material

- Jurapanà.

### Reactor employed

The reactor employed is that of example 1.

### Type of treatment

Treatment with acrylic acid mixed with argon plasma in flow conditions.

### Characterisation of the treated samples

The sample was subjected to 7 measurements of the contact angle, by depositing 20 microlitre drops of distilled water in random positions and subsequently calculating the average. The treated material displays a decrease of the contact angle from a value of approximately 50° to a minimum value of 30°.

### Anti-bacterial and self-cleaning

The samples were treated with TiO₂, CF₄, C₂F₂ and a considerable anti-bacterial and self-cleaning property was observed.

## Claims

1. A dry plasma surface treatment method for stone materials and composites, comprising:
• a plasma surface treatment of a gaseous or vapour phase precursor.

2. A method according to claim 1, further comprising a pre-treatment of the surface by means of plasma.

3. A method according to claim 1 or 2, **characterised in that** it may be carried out at a low pressure or at an atmospheric pressure.

4. A method according to claims from 1 to 3, wherein the plasma of the precursor is generated from at least one gas selected from the group comprising nitrogen, noble gases, oxygen, hydrogen, fluorinated gases, gaseous hydrocarbons and gaseous fluorocarbons.

5. A method according to claims from 1 to 3, wherein the plasma is generated from a gas-vapour mixture, wherein the vapour is obtained by vaporisation or nebulisation with a gas of a liquid compound selected from the group comprising water vapours, ammonia, acrylic acid, silane, siloxanes, hydrocarbon and perfluorine compounds.

6. A method according to claims from 1 to 4, wherein the treatment of the surface by means of plasma is performed with SF₆ or SOF₂ plasma in flow conditions, preferably with SF₆ plasma.

7. A method according to claims 1, 2, 3 and 5, wherein the treatment of the surface by means of plasma is performed with hexamethyldisiloxane (HMDSO) plasma in non flow conditions.

8. A method according to claims from 1 to 7, comprising a pre-treatment with O₂ plasma in flow conditions.

9. A method according to claim 8, wherein the pre-treatment is followed by two treatments employing HMDSO plasma:
• the first in HMDSO plasma in mixture with oxygen in flow conditions, and
• the second in pure HMDSO plasma in flow conditions.

10. A method according to claim 1, wherein the treatment with plasma comprises:
• a treatment with styrene plasma in flow conditions and
• a treatment with SF₆ fluorinated plasma in flow conditions.

11. A method according to claim 1, wherein the treatment with plasma comprises:
• a treatment with HMDSO plasma in non flow conditions and
• a treatment with SF₆ fluorinated plasma in flow conditions.

12. A method according to any of the preceding claims, wherein the fluorinated gas is SF₆ or SOF₂.

13. A method according to any of the preceding claims, wherein the gaseous hydrocarbon is CH₄ or C₂H₂.

14. A method according to any of the preceding claims, wherein the gaseous fluorocarbon is CF₄ or C₂F₆.

15. A method according to claim 3, wherein, in the case of low pressure treatment, before the exposure to the plasma the method provides the following steps:
- a step of degassing, wherein the samples are taken to limit pressure by exploiting a vacuum chamber;
- filling the vacuum chamber with the gas (or gas mixture) until the working pressure is reached;
- maintaining the working pressure by means of evacuation by a pumping system.

16. A method according to claim 3, wherein, in the case of atmospheric pressure treatment, the materials are continuously treated.

17. A method according to any of the preceding claims, wherein the application of the plasma is preceded by a smoothing step.

18. A method according to any of the preceding claims, wherein the generation of the plasma may be in situ or remote.

19. Stone materials and composites obtained according to any of the preceding claims with a contact angle to water > 90°.

20. Stone materials and composites obtained according to any of claims from 1 to 18 with a contact angle to castor oil < 30° before the treatment and > 50° after the treatment.

21. Stone materials and composites obtained according to any of claims from 1 to 18 with a contact angle to olive oil < 30° before the treatment and > 60° after the treatment.
